# EUROPEAN PATENT APPLICATION

(11) **EP 2 630 873 A1**
(43) Date of publication of application: **28.08.2013**
(21) Application number: 13156611.9
(22) Date of filing: 25.02.2013
(51) Int. Cl.: A23L 1/237

(54) **Method for reducing the salt content of food**

(30) Priority: 24.02.2012 NL 2008347
(71) Applicant: JC Holding B.V., 4400 AA Yerseke (NL)
(72) Inventor: Van der Endt, Jan Cornelis, 4401 NG Yerseke (NL)
(74) Representative: van Kooij, Adriaan

(57) **Abstract**

The present invention relates to methods for reducing the salt content in food. Specifically, the present invention relates to methods for reducing the salt content of, or the amount of salt in, supplementary added solid salt comprising food, the method comprises the steps of:
a) providing the ingredients of, or the starting products for, said food with the exception of additionally to be added solid salt;
b) commonly preparing, or forming, said food by blending and/or processing said ingredients and/or starting products;

wherein during the blending and/or processing in step (b) purified and filtrated sea water is added with a salt content of 2.5% to 4.5% (w/w) in an amount sufficient to provide a salt reduction of 5% to 80% (w/w) in said food in comparison with the same food with additionally added solid salt.

## Description

The present invention relates to methods for reducing the salt content in food.

Salt reduction, generally in the form of NaCl and particularly Na⁺, in food received not as much attention as the focus on the reduction of saturated trans fats.

This lack of attention is not correct because salt has a strong influence on blood pressure and subsequently heart and artery diseases, one of the primary causes of mortality in especially the Western world.

Salt is primarily ingested through food. As an example, in an average Western diet 28% of salt is ingested through bread, 11% through cheese and other diary products, 10% through meat or meat products and 7% through soup.

In a recent report, it was stated that the average salt intake was approximately 9 grams per day while a salt intake of less than 6 grams per day was considered as a safe amount. Formulated differently, the salt intake per day is preferably reduced by a minimum of 30%.

However, salt is an important taste improver in most foods and simply reducing the amount of salt in a products generally is no option because such reduction, amongst others, will have an undesirable major impact on the taste perception of the products.

The French patent publication FR 07 52565 discloses preparations of bread (pain artisanal and biscottes) wherein part of the traditionally added solid salt in the recipe is replaced by filtrated sea water. However, in both examples provided solid salt is still added resulting in a sodium reduction of only 7%.

Considering the above there is a need in the art to reduce the amount of salt in food, such as a reduction of more than 10%, without having a substantial influence on the taste perception.

The object of the present invention, amongst others, is to fulfill the above need in the art.

This object is met by the present invention through methods as defined in the appended claims.

Specifically, this object is met by the present invention through a method for reducing the salt content of, or the amount of salt in, supplementary added solid salt comprising food, the method comprises the steps of:
a) providing the ingredients of, or the starting products for, said food and purified and filtrated sea water with a salt content of 2.5% to 4.5% (w/w);
b) commonly preparing, or forming, said food by mixing and/or processing said ingredients
   and/or starting products and said sea water; wherein the method does not comprise adding solid salt, i.e., all added salt according to the present invention is in the form of sea water.

The present inventors have surprisingly discovered that the above method does not only provide a significant reduction of the amount of salt in food but additionally contributes to a taste improvement of the food. Formulated differently, the taste perception is not only maintained by using the present method but is also improved.

The term "purified and filtrated sea water" relates to treated sea water, the sea water being suitable for human consumption due to the treatment.

The term "purified and filtrated sea water", as used in the present context, relates to purified sea water originating from a natural source of seawater, preferably Oosterschelde water.

The purified and filtrated sea water according to the present invention is only subjected to a minimal number of cleaning treatments as compared to the source sea water. These cleaning treatments are generally directed to the removal of undesired contaminations and/or contaminants present in the source sea water. This means that at least the dissolved salts, and the concentrations thereof, in the present purified sea water are substantially comparable, or substantially identical, to those in the source sea water.

The term food in the present context relates to foodstuff, and especially composed food, also designated as processed food, for which, during preparation, traditionally use is made of the addition of solid salt. This added solid salt is for food the major contributor to the resulting salt content in the finished food product. The method according to the present invention provides food being prepared without the use of solid salt.

The term "preparing" according to the present invention relates to any common technique of food processing such as cooking, backing, frying, marinating, injecting, steaming, fermentation, cooling, heating, or any combination thereof.

The term "processing" according to the present invention relates to any common technique for food preparation such as mincing, cutting, kneading, blending, peeling, frothing, separating or any combination thereof.

The terms "ingredient" and "starting product" according to the present invention relate to any intermediate food product such as processed intermediate food products such as flour and natural intermediate food products such as vegetables and meat.

According to the present invention, use is made, as salt replacement, of purified and filtrated sea water with a salt content of 2.5% to 4.5% (w/w) such as purified and filtrated sea water with a salt content of 3%, 3.5%, 3.6%, 3.7%, 3.8%, 3.9% or 4.0%.

Within the context of the present invention, the described addition of purified and filtrated sea water can also be provided by addition to the present purified and filtrated sea water of fresh water thereby providing the indicated salt percentages, i.e., diluting a concentrate of the present sea water.

The terms "ingredient" and "starting product" do not relate to living "ingredients" and "starting products" such as shellfish and crustaceans.

According to a preferred embodiment the present invention relates to methods, wherein one of the ingredients of, or starting products for, said food fresh water is and wherein at least 10% to 80% (v/v) of the commonly used fresh water is replaced by 10% to 80% (v/v) purified and filtrated sea water, preferably 100%.

The present food is preferably selected from the group consisting of bread, rice, meat, fish, meat products, salads, vegetables, snacks, pasta, potatoes, potato products, soups, desserts, pastries, diary products, sauces, marinades, dressings, bakery products and intermediate products for the food industry.

Especially considering the improved taste provided by the use of the present purified and filtrated sea water for the preparation of food, the present invention, according to another aspect, relates to the use of purified and filtrated seawater for replacement of additionally added sold salt in food, preferably composed food, and the use of purified and filtrated sea water as taste improver for food.

Composed food according to the present invention is food prepared by using at least two ingredients or intermediate products being not water.

The present invention, according to another aspect, also relates to concentrated purified and filtrated sea water with a salt content of 5% to 15% (w/w) such as concentrated filtrated and purified sea water with a salt content of 5%, 6%, 7%, 8%, 9%, 10%, 11%, 12%, 13%, 14% or 15% (w/w). Such concentrated solutions are especially preferred when commonly relatively small amounts of fresh water and large amounts of solid salt are used during preparation.

The present invention will be further detailed using examples of preferred embodiments of the present invention.

### Examples

### Example 1: The preparation of bread

During the preparation of a (bread) dough, use is made, besides the common ingredients, of approximately 50% (w/w) fresh water in the form of tap water. Subsequently, an average of 2.1% (w/w) solid salt (97.5% sodium chloride) is added as taste improver.

During preparation of a (bread) dough according to the present invention, fresh water is completely replaced by filtrated and purified sea water with a salt content of 3.4% (salinity) and no solid salt was added.

The resulting (bread) dough was baked and the salt content of the resulting product and the traditionally prepared product was determined.

The product prepared according to the present invention comprised an average of 1.7% salt while the traditionally prepared product comprised 2.1% salt resulting in a salt reduction of 18%.

The taste perception of both products was compared and the product produced according to the present invention received a significantly better score.

### Example 2: The preparation of meat products

Traditionally, ham is prepared by injection of brine, i.e. fresh water with added solid salt. The common salt percentage of this brine is 10 to 20%. After injection, the hams are smoked or cooked.

The traditionally used brine was completely replaced by the present purified and filtrated sea water with a salt content of 3.4% (salinity).

The salt content of the products prepared according to the present invention, i.e. cooked or smoked ham injected with purified and filtrated sea water, was compared with smoked or cooked hams traditionally prepared using brine. The product prepared according to the present invention comprised 50% less salt than the traditional product.

The taste perception of both products was compared and the product produced according to the present invention received a significantly better score.

### Example 3: Concentrate of purified and filtrated sea water

The present purified and filtrated sea water was boiled down to a 35% concentrate/bouillon. The salinity obtained was approximately 8.4% (of which 5.88% sodium chloride).

This concentrate can, amongst others, be used as a salt replacement or taste improver in salads, raw or boiled vegetables, etc.

### Example 4: The preparation of fish

Fish, fish filet and shrimps were minimally 4 hours before preparation marinated in the present filtrated and purified sea water. After marinating, the products were traditionally prepared.

The taste of fish, fish filet and shrimps was compared with the taste of traditionally salted products and the products prepared according to the present invention received a significantly better score while the salt content was significantly reduced.

### Example 5: The preparation of potatoes

Potatoes were peeled and washed and subsequently boiled in the present purified and filtrated sea water combined with 50% fresh water.

The taste of the potatoes was compared with the taste of traditionally boiled potatoes (fresh water and added solid salt) and the potatoes prepared according to the present invention received a significantly better score.

## Claims

1. Method for reducing the salt content of, or the amount of salt in, supplementary added solid salt comprising food, the method comprises the steps of:
a) providing the ingredients of, or the starting products for, said food and purified and filtrated sea water with a salt content of 2.5% to 4.5% (w/w);
b) commonly preparing, or forming, said food by blending and/or processing said ingredients and/or starting products and said sea water;
wherein the method does not comprise adding solid salt.

2. Method according to claim 1, wherein one of the ingredients of, or starting products for, said food is fresh water and wherein at least 10% to 80% (v/v) of the fresh water is replaced by 10% to 80% (v/v) purified and filtrated sea water.

3. Method according to claim 2, wherein said fresh water is replaced by purified and filtrated sea water.

4. Method according to any of the claims 1 to 3,
wherein said food is selected from the group consisting of bread, rice, meat, fish, meat products, salads, vegetables, snacks, pasta, potatoes, potato products, soups, desserts, pastries, diary products, sauces, marinades, dressings, bakery products and intermediate products for the food industry.

5. Use of purified and filtrated sea water for 100% replacement of solid salt in food.

6. Use of purified and filtrated sea water according to claim 5, wherein said food is composed food.

7. Use of purified and filtrated sea water as taste improver in food.

8. Concentrated purified and filtrated sea water with a salt content of 5% to 45% (w/w).

9. Use of concentrated purified and filtrated sea water according to claim 8 as taste improver and/or solid salt replacement.
